# EUROPEAN PATENT SPECIFICATION

(11) **EP 1 812 254 B1**
(45) Date of publication and mention of the grant of the patent: **29.06.2011**
(21) Application number: 05792395.5
(22) Date of filing: 11.10.2005
(51) Int. Cl.: B60G 17/052, B60G 17/015, G01G 19/08

(54) **AN AXLE LOAD CONTROL SYSTEM AND A WHEEL BASE ADJUSTMENT SYSTEM**
ACHSLASTSTEUERSYSTEM UND ACHSSTANDEINSTELLSYSTEM
SYSTEME DE REGULATION DE LA CHARGE A L'ESSIEUX ET SYSTEME DE REGLAGE D'ENTRAXE DES ESSIEUX

(30) Priority: 18.10.2004 SE 0402543
(43) Date of publication of application: 01.08.2007
(73) Proprietor: VOLVO LASTVAGNAR AB, 405 08 Göteborg (SE)
(72) Inventor: LILJEBLAD, Benny, S-443 38 Lerum (SE); REGNELL Hans,, 44250 Ytterby (SE)
(74) Representative: Fröhling, Werner Otto
(86) International application number: PCT/SE2005/001511
(87) International publication number: WO 2006/043872

(56) References cited:
- EP-A- 1 167 094
- EP-A2- 1 375 207
- US-A- 4 789 038
- US-A- 4 854 407
- US-A- 5 025 877
- US-A- 5 025 877
- US-A- 5 167 289
- US-B1- 6 203 045
- DATABASE WPI Week 200163, Derwent Publications Ltd., London, GB; AN 2001-561232, XP008113649 & JP 2001 213130 A (HINO MOTORS LTD) 07 August 2001
- DATABASE WPI Week 199727, Derwent Publications Ltd., London, GB; AN 1997-293920, XP008113651 & JP 09 109645 A (NISSAN DIESEL KOGYO KK) 28 April 1997

## Description

### TECHNICAL FIELD

The present invention relates to an axle load control system and method for a load carrying truck according to the preambles of claims 1 and 8. Furthermore, the invention relates to a system and a method for adjusting the theoretical wheel base according to the preambles of claims of 12 and 18. The invention is applicable to both semi-trailer tractors and rigid trucks.

### BACKGROUND

Load carrying trucks are generally well adapted and specified for their particular missions and for particular kinds of loads. Modern air suspension systems are smoother and more controllable than more traditional spring suspension systems. Traditionally, however, trucks are optimized for an even axle load distribution when the vehicle is fully loaded. In this situation, the centre of gravity of the truck is generally conveniently located at or near the longitudinal centre of the truck and each axle is loaded well within legal limits for axle load. Thus, once fully loaded, a truck normally starts its trip with an even and road-legal axle load distribution. As long as the full load is unloaded at the same final destination, the truck will maintain this even axle load distribution throughout its trip. If, on the other hand, the truck is partially unloaded at one or more intermediate destinations, the centre of gravity of the truck is usually shifted in a forward direction since the trailer or other load space is commonly successively unloaded from the rear of the truck. This means that, although the total weight of the vehicle is now lower than it was at the start of the trip, its forward distribution in the truck may lead to an undesired overload of the front axle of the truck. This undesired overload may of course be corrected by repositioning the remaining load in the truck rearwards, but this is rarely done in practice. This undesired front axle overload is a frequently neglected aspect and the general awareness of it is often limited among truck drivers, in spite of the fact that a severely overloaded front axle may pose a serious safety hazard on the road, as well as limiting the operational life of chassis components.

In addition to restrictions related to the axle load, there are legal requirements on the wheel base of the truck. For example, a minimum wheel base could be stipulated so as to avoid overload of a road or bridge.

US6203045 relates to a system for automatically distributing weight within a heavy duty vehicle. The system includes a plurality of sensors that provide information indicative of weight at each of the axles. The position of an attachment disc 40 with reference to the cab is automatically adjustable. The attachment disc 40 serves to connect the trailer to the cab.

Positioning and repositioning of the attachment disc, when attached and loaded by the trailer, will require substantial forces. Hence, risk for that the attachment disc is stuck in a position when loaded may be present. Further, if at all possible when heavily loaded, movement of the attachment disc will not transfer load between the front axle and first and second rear axles in an independent manner. The solution in US6203045 can not at all address load distribution coming from load of the truck.

### SUMMARY OF THE INVENTION

According to a first aspect of the invention, a first object of the invention is to provide a load control system of the type mentioned in the introduction, by which system an undesired overload of an axle of a truck can be avoided.

This problem is solved by the invention providing an axle load control system comprising the features of claim 1.

In one embodiment, the control processor is arranged to control the wheel suspension system so as to effect an Individual adjustment of the suspension characteristics for the rear axles in such a way that excess axle load on the front axle is transferred to one or more of the rear axles.

In an advantageous embodiment, the control processor is arranged to continuously compare said actual axle load values with said predefined maximum allowable axle load value for each axle, and to automatically continuously control the wheel suspension system in the described manner.

In an alternative embodiment of the invention, the control processor is arranged to continuously compare said actual axle load values with said predefined maximum allowable axle load value for each axle, and to a driver indicate the need to control the wheel suspension system in the described manner, said indication being communicated to the driver via a driver interface means provided with manual control means for effecting said individual adjustment of the suspension characteristics for each axle in predefined discrete steps. One example of such an embodiment is when the truck is a three-axle semi-trailer tractor having a front axle and two rear axles, and wherein the individual adjustment is made in:
- a first discrete step, wherein the load on the two rear axles is distributed with 50% on each rear axle, and
- a second discrete step, wherein the load on the two rear axles is distributed with 60% on the most forward rear axle and 40% on the most rearward rear axle.

In a suitable embodiment, the wheel suspension system is an air suspension system comprising suspension units in the form of air bellows, and that said load sensor means are adapted to detect the air pressure in said air bellows.

In an advantageous embodiment of the invention, the control processor is further adapted to receive and process input from an electronic brake system of the truck, said input adding temporary limitations to the transferable loads between axles due to present dynamic load conditions on each axle.

The invention also discloses a method of axle load control for a load-carrying truck having a front axle and two or more rear axles, using a system comprising a wheel suspension system with a suspension control processor and a load sensor means arranged at each of said axles for detecting one or more load indication parameters, said load sensor means providing said parameters to said suspension control processor which translates the parameters into actual axle load values for the individual axles. The method is especially characterized in that the control processor compares said actual axle load values with a predefined maximum allowable axle load value for each axle, and controls the wheel suspension system so as to individually adjust the suspension characteristics for each axle in such a way that excess axle load on an overloaded axle is transferred to one or more of the remaining axles, thereby adjusting the theoretical wheelbase of the truck.

According to a second aspect of the invention, a further object of the invention is to provide a system of the type mentioned in the introduction, by which system a desired theoretical wheel base of a truck can be obtained. This problem is solved by means of a system according to claim 12. By such a system the wheel base of a truck can be adjusted by transferring load from one rear axle to another. By adjustment of the suspension characteristics of at least one axle the load distribution is altered, and thus the theoretical wheel base is adjusted. Although, this is normally performed by adjustment of at least one rear axle, the theoretical wheel base can be adjusted by adjustment of the suspension characteristics of a front axle if the truck is provided with two front axles.

The second aspect of the invention also provides a method for adjusting the theoretical wheel base according to claim 18.

Further features and advantages of the invention will be described in the detailed description of embodiments below.

### BRIEF DESCRIPTION OF THE DRAWINGS

The invention will now be described in greater detail by way of example only and with reference to the attached drawings, in which
- Fig. 1: shows a schematic view of a three-axle 6X4 or 6X2 semi-trailer tractor, illustrating the theoretical wheelbase at a 50/50 split load distribution on the rear axles.
- Fig. 2: shows a simplified diagram of the axle load control system according to the invention;
- Fig. 3: shows a schematic side view of a fully loaded semi-trailer and tractor unit, wherein the tractor has a 50/50 split load distribution on the rear axles;
- Fig. 4: shows the semi-trailer and tractor unit of Fig. 3, now with a partly loaded semi-trailer resulting in a front axle overload on the tractor due to a forward shift of the centre of gravity of the unit. The tractor still has a 50/50 split load distribution on the rear axles;
- Fig. 5: shows the semi-trailer and tractor unit of Fig. 4, wherein the axle load control system according to the invention has sensed the overload condition of Fig. 4 and then relieved the front axle of the tractor from overload by effecting a redistribution of load between the rear axles, in this case a 60/40 split load distribution on the rear axles of the tractor;
- Fig. 6: shows a schematic side view of a fully loaded three-axle rigid truck, wherein the truck has a 50/50 split load distribution on the rear axles;
- Fig. 7: shows the rigid truck of Fig. 6, now only partly loaded, resulting in a front axle overload due to a forward shift of the centre of gravity of the truck. The truck still has a 50/50 split load distribution on the rear axles;
- Fig.8: shows the truck of Fig. 7, wherein the axle load control system according to the invention has sensed the overload condition of Fig. 7 and then relieved the front axle from overload by effecting a redistribution of load between the rear axles, in this case a 60/40 split load distribution on said rear axles;
- Fig. 9: shows a schematic side view of a fully loaded three-axle rigid timber truck, wherein the axle load control system 40/60 split load distribution on the rear axles in order to accommodate for a heavy rear- mounted timber crane on the truck, and
- Fig. 10: finally shows the timber truck of Fig. 9, wherein the axle load control system according to the invention has compensated for a rear shift of the centre of gravity of the truck in an unloaded condition due to the heavy rear-mounted crane. In this case a 20/80-split load distribution has been effected on the rear axles.

### DESCRIPTION OF EXEMPLARY EMBODIMENTS

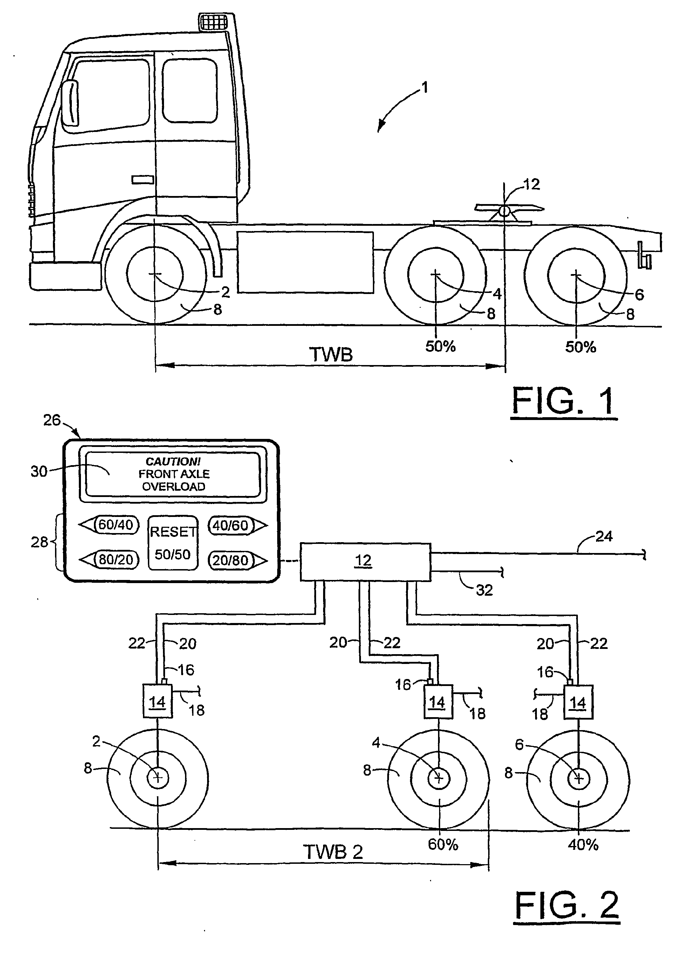

In Fig. 1, reference numeral 1 generally denotes a load-carrying truck using an axle load control system and/or a wheel base adjustment system according to the invention. In Fig. 1, the truck is represented by a three-axle 6X4 or 6X2 semi-trailer tractor. The truck has a front axle 2 and two rear axles 4, 6 arranged in a tandem configuration, wherein both rear axles are commonly suspended on a pivoting frame (not shown) so that wheels 8 of both rear axles 4, 6 are both constantly in contact with the road. It should, however be noted that the invention is also applicable on any other rear axle combination, such as a boogie combination, wherein one of the rear axles 4, 6 may be lifted so as to lift the wheels 8 of this axle out of road contact if necessary.

Fig. 1 illustrates the theoretical wheelbase TWB at a 50/50 split load distribution on the rear axles 4, 6, i.e. where each rear axle 4, 6 carries 50% of the load on the rear axles. This is the most common fixed load distribution on known trucks today, and in this particular embodiment of the invention, it is the default start-up setting of the axle load control system of the invention. Normally, a so called king-pin for towing the semi-trailer (not shown) is positioned in a fifth wheel 12 halfway between the two rear axles 4, 6 and the theoretical wheelbase will in this case - with a 50/50 split load distribution as described above - extend back to the longitudinal position of the fifth wheel 12.

The diagram in Fig. 2 schematically illustrates the systems according to the invention. The axle load control system as well as the wheel base adjustment system is preferably integrated with a wheel suspension system with a suspension control processor 12. In an advantageous embodiment, the wheel suspension system is an air suspension system comprising suspension units 14 in the form of air bellows, at least on the two rear axles 4, 6. It should be noted that the invention is not limited to the use of such air bellows as suspension units, but that other types of suspension units 14 like hydraulic oil-dampened cylinders (not shown) may also be used. Load sensor means 16 are arranged at each of said axles 2, 4, 6 for detecting one or more load indication parameters. The load sensor means 16 provide these parameters to the suspension control processor 12, which may translate the parameters into actual axle load values for the individual axles 2, 4, 6.

In the described exemplary embodiment, the load sensor means 16 - at least for the two rear axles 4, 6 are adapted to detect the air pressure in the suspension units 14. When the vehicle is equipped with front air suspension, the load sensor means 16 on the front axle will also detect the air pressure in the suspension units 14. When the vehicle is equipped with a leaf front suspension, the load sensor means 16 will detect the load on the front axle depending on the type of sensor used. It is e.g. possible to use a sensor that transforms the height information of the front axle into a load value. The suspension units 14 are supplied with pressurized air from an onboard source of compressed air (not shown) via pressurized air supply conduits 18. The load sensor means 16 are connected to the control processor 12 by means of sensor signal lines 20. Additionally, control signal lines 22 are arranged from the control processor 12 to each suspension unit 14. The control processor 12 is in the shown embodiment connected to a trailer communication data bus 24, which communicates the type of semi-trailer (not shown in Fig. 2) currently coupled to the tractor etc.

An essential feature according to the first aspect of the invention is that the control processor 12 is arranged to compare the actual axle load values with a predefined maximum allowable axle load value for each axle. Then the control processor 12 controls - or indicates to a driver the need to control - the wheel suspension system so as to effect an individual adjustment of the suspension characteristics for each axle 2, 4, 6. This is made in such a way that excess axle load on an overloaded axle is transferred to one or more of the remaining axles 2, 4, 6, thereby adjusting the theoretical wheelbase TWB of the truck 1. The term excess axle load here means the axle load, which exceeds a maximum allowed axle load Pₘₐₓ. The axle load control system thus enables an adjustment of the theoretical wheelbase of the truck so as to maintain an optimum axle load distribution for any load configuration.

In a favourable embodiment, the control processor 12 is arranged so as to effect an individual adjustment of the suspension characteristics for the rear axles 4, 6 only, still in such a way that excess axle load on the front axle 2 is transferred to one or more of the rear axles 4, 6.

In a convenient embodiment of the invention, the control processor 12 is arranged to continuously compare said actual axle load values with said predefined maximum allowable axle load value Pₘₐₓ for each axle, and to automatically continuously control the wheel suspension system in the described manner.

In an alternative embodiment of the invention, the control processor 12 is likewise arranged to continuously compare said actual axle load values with the predefined maximum allowable axle load value Pₘₐₓ for each axle 2, 4, 6. However, in this embodiment the axle load control system indicate the need to control the wheel suspension system in the described manner to a driver. This indication may suitably be communicated to the driver via a driver interface means 26 shown as an optional feature in the diagram of Fig. 2. The driver interface means 26 is provided with manual control means 28 - here in the form of buttons for choosing various fixed axle load distribution settings - for effecting said individual adjustment of the suspension characteristics for each axle 2, 4, 6 in predefined discrete steps. In Fig. 2, the manual control means 28 include buttons for the following distribution splits of axle load between the two rear axles 4, 6: "60/40", "80/20", "RESET 50/50", "40/60" and "80/20", where the numbers indicate percentages of total axle load on the two rear axles 4, 6. The driver interface means 26 is also provided with a visual display 30, which in Fig. 2 displays a message to the driver in the form of "CAUTION! FRONT AXLE OVERLOAD". The driver may then use the manual control means 30 - i.e. said buttons - to choose an appropriate adjustment setting in order to relieve the front axle 2. One example of such an embodiment is when the truck 1 is a three-axle semi-trailer tractor 1 having a front axle 2 and two rear axles 4, 6. In one such example, the individual adjustment is made in a default first discrete step, wherein the load on the two rear axles 4, 6 is distributed with 50% on each rear axle (i.e. a so called 50/50 split), and a second discrete step, wherein the load on the two rear axles 4, 6 is distributed with 60% on the most forward rear axle 4 and 40% on the most rearward rear axle 6 (i.e. a so called 60/40 split). This example - together with examples of continuous automatic adjustment - will be described in further detail below.

A similar driver interface means (not shown) may be used also in the case where the individual adjustment is made automatically by the axle load control system of the invention. In such a case, the driver interface means may continually display the current adjustment setting for the driver. The driver interface means 26 may also be integrated In a general suspension control display of the truck 1.

Suitably, the control processor 12 is further adapted to receive and process input from an electronic brake system (EBS) of the truck 1. The electronic brake system is not shown in the diagram of Fig. 2, although an EBS-signal line 32 is schematically indicated to the right in the figure, leading to the control processor 12. The input from the electronic brake system add temporary limitations to the transferable loads between axles 2, 4, 6 due to present dynamic load conditions on each axle 2, 4, 6.

The invention also discloses a method of axle load control using the system described above. The method is especially characterized in that the control processor 12 compares said actual axle load values with a predefined maximum allowable axle load value Pₘₐₓ for each axle, and controls the wheel suspension system so as to individually adjust the suspension characteristics for each axle 2, 4, 6 in such a way that excess axle load on an overloaded axle is transferred to one or more of the remaining axles, thereby adjusting the theoretical wheelbase TWB of the truck 1.

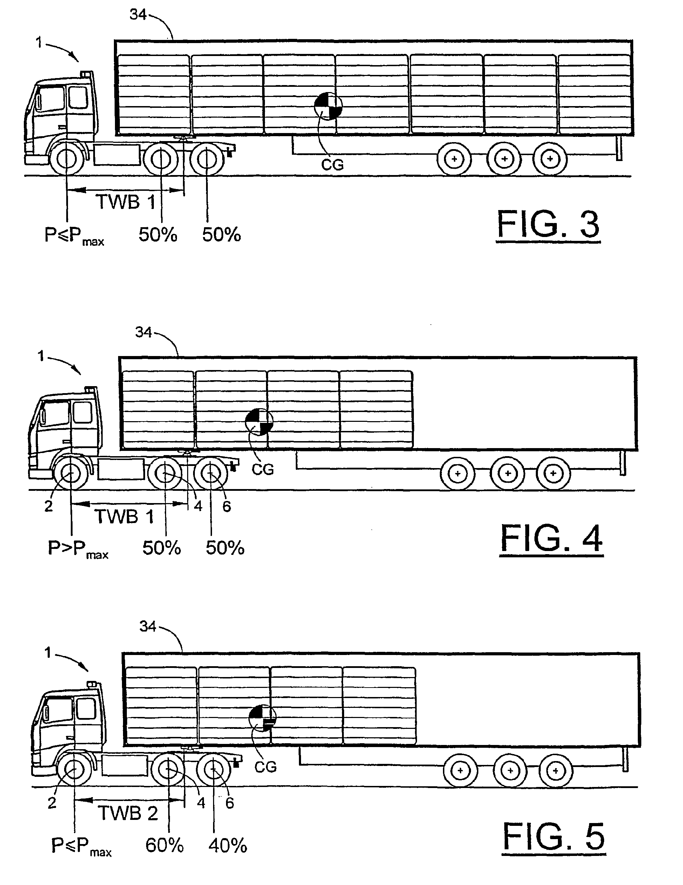

A first practical example of the operation of the axle load control system according to the invention will now be described with reference to Figs. 3-5. The truck 1 here consists of a tractor and a semi-trailer 34. Fig. 3 shows the truck 1 in a fully loaded condition on its way to a first destination. The centre of gravity CG is located approximately half way along the length of the truck combination and the axle load is distributed evenly with a default 50/50 split on the two rear axles 4, 6 of the tractor. The axle load P on the front axle 2 of the tractor is lower than, or equal to the predefined maximum allowable axle load value Pₘₐₓ for the front axle 2. Thus, once fully loaded, the truck 1 starts its trip with an even and road-legal axle load distribution. The tractor has a first theoretical wheelbase TWB 1.

In Fig. 4, the semi-trailer 34 has just been partially unloaded at an intermediate destination. The centre of gravity CG of the truck 1 has consequently shifted in a forward direction since the semi-trailer 34 was unloaded from the rear. This means that, although the total weight of the vehicle is now lower than it was at the start of the trip, its forward distribution in the semi-trailer 34 results in an undesired overload of the front axle 2 of the tractor. Thus the axle load P on the front axle now exceeds the predefined maximum allowable axle load value Pₘₐₓ for the front axle 2. This overload condition is detected by the load sensor means 16 (see Fig. 2) at the front axle 2 and communicated to the control processor 12 of the axle load control system of the invention.

In Fig. 5, the control processor 12 now controls the wheel suspension system so as to effect an individual adjustment of the suspension characteristics for the rear axles 4, 6 in such a way that the excess axle load on the front axle 2 is transferred to the rear axles 4, 6 of the tractor. In the shown example, the axle load control system automatically compensates for the front axle overload by altering the load distribution from a 50/50 split on the rear axles to a 60/40 split, whereby the theoretical wheelbase TWB is decreased from TWB 1 to TWB 2. Thus, in addition to eliminating the overload condition on the front axle 2, the axle load control system has effectively decreased the theoretical wheelbase TWB of the tractor.

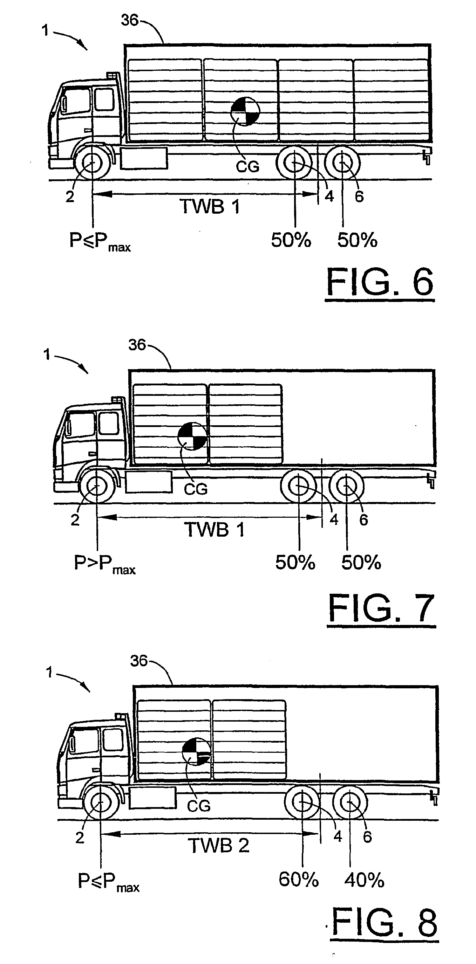

A second practical example of the operation of the axle load control system according to the invention will now be described with reference to Figs. 6-8. The truck 1 here consists of a rigid truck having a load compartment 36. This example is similar to the first example and thus Fig. 6 shows the truck 1 in a fully loaded condition on its way to a first destination. The centre of gravity CG is located approximately half way along the length of the truck 1 and the axle load is distributed evenly with a default 50/50 split on the two rear axles 4, 6. The axle load P on the front axle 2 is lower than, or equal to the predefined maximum allowable axle load value Pₘₐₓ for the front axle 2. Thus, once fully loaded, the truck 1 starts its trip with an even and road-legal axle load distribution. The truck has a first theoretical wheelbase TWB 1.

In Fig. 7, the load compartment 36 has just been partially unloaded at an intermediate destination. The centre of gravity CG of the truck 1 has consequently shifted in a forward direction since the load compartment 36 was unloaded from the rear. This means that, although the total weight of the vehicle is now lower than it was at the start of the trip, its forward distribution in the load compartment results in an undesired overload of the front axle 2. Thus the axle load P on the front axle now exceeds the predefined maximum allowable axle load value Pₘₐₓ for the front axle 2. This overload condition is detected by the load sensor means 16 (see Fig. 2) at the front axle 2 and communicated to the control processor 12 of the axle load control system of the invention.

In Fig. 8, the control processor 12 now controls the wheel suspension system so as to effect an individual adjustment of the suspension characteristics for the rear axles 4, 6 in such a way that the excess axle load on the front axle 2 is transferred to the rear axles 4, 6 of the tractor. In the shown example, the axle load control system automatically compensates for the front axle overload by altering the load distribution from a 50/50 split on the rear axles to a 60/40 split, whereby the theoretical wheelbase TWB is decreased from TWB 1 to TWB 2. Thus, in addition to eliminating the overload condition on the front axle 2, the axle load control system has effectively decreased the theoretical wheelbase TWB of the truck 1.

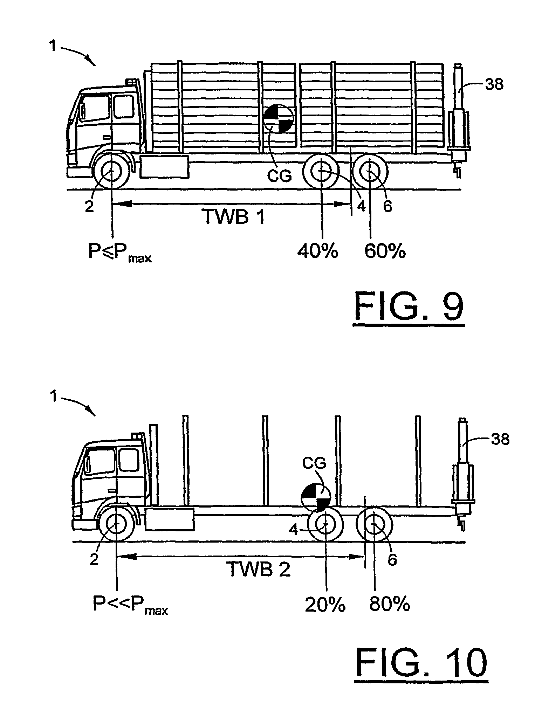

A final, third practical example of the operation of the axle load control system according to the invention will now be described with reference to Figs. 9 and 10. The truck 1 here consists of a three-axle rigid timber truck. In its fully loaded condition shown in Fig. 9, the axle load control system has effected a 40/60 split load distribution on the rear axles 4, 6 in order to accommodate for a heavy rear-mounted timber crane 38. The truck has a first theoretical wheelbase TWB 1.

Fig. 10 shows the timber truck of Fig. 9 in an unloaded condition, wherein the axle load control system according to the invention has compensated for a rear shift of the centre of gravity CG of the truck 1 in said unloaded condition due to the heavy rear-mounted crane 38. In this case a 20/80-split load distribution has been effected on the rear axles 4, 6. After the adjustment, the truck has a longer theoretical wheelbase TWB 2.

It is to be understood that the invention is by no means limited to the embodiments described above, and may be varied freely within the scope of the appended claims. For example, the trucks may be of a wide variety of types, having three or more axles. The invention is moreover suitable for busses, especially for large touring busses with two rear axles, where a proper load distribution is necessary to avoid an overload on the front axle. The invention is also suitable for trailers and for construction equipment vehicles.

### LIST OF REFERENCE NUMERALS AND OTHER REFERENCE SIGNS

1. Load-carrying truck
2. Front axle
4. Most forward rear axle
6. Most rearward rear axle
8. Wheels
10. Fifth wheel
12. Suspension control processor
14. Suspension units
16. Load sensor means
18. Pressurized air supply conduits
20. Sensor signal lines
22. Control signal lines
24. Trailer communication data bus
26. Driver interface means
28. Manual control means
30. Information display
32. EBS-signal line
34. Semi-trailer
36. Load compartment on rigid truck
38. Rear-mounted timber crane

- TWB:: Theoretical Wheel Base
- TWB 1:: Theoretical Wheel Base prior to adjustment
- TWB 2:: Theoretical Wheel Base after adjustment
- P:: axle load
- Pₘₐₓ:: Maximum allowed axle load

## Claims

1. Axle load control system for a load-carrying truck (1) having a front axle (2) and two or more rear axles (4, 6), the system comprising:
- a wheel suspension system with a suspension control processor (12), said wheel suspension system being an air suspension system comprising suspension units (14) in the form of air bellows;
- load sensor means (16) arrangeable at each of said axles (2, 4, 6) for detecting one or more load indication parameters, said load sensor means (16) providing said parameters to said suspension control processor (12) which translates the parameters into actual axle load values for the individual axles (2, 4, 6), **characterized in**
**that** said load sensor means (16) are arranged to detect the load indication parameters by measuring the air pressure in said air bellows (14),
**that** the control processor (12) is arranged to compare said actual axle load values with a predefined maximum allowable axle load value (Pₘₐₓ) for each axle (2, 4, 6), and to control - or indicate to a driver the need to control - the wheel suspension system so as to effect an individual adjustment of the suspension characteristics for each axle (2, 4, 6) by controlling the air pressure in at least one said air bellow (14) in such a way that excess axle load on an overloaded axle (2, 4, 6) is transferred to one or more of the remaining axles (2, 4, 6), thereby adjusting the theoretical wheelbase (TWB) of the truck (1).

2. Axle load Control system according to claim 1, **characterized in that** the control processor (12) is arranged to control the wheel suspension system so as to effect an individual adjustment of the suspension characteristics for the rear axles (4, 6) in such a way that excess axle load on the front axle (2) is transferred to one or more of the rear axles (4, 6).

3. Axle load control system according to claim 1 or 2, **characterized in that** the control processor (12) is arranged to continuously compare said actual axle load values with said predefined maximum allowable axle load value (Pₘₐₓ) for each axle (2, 4, 6), and to automatically continuously control the wheel suspension system in the described manner.

4. Axle load control system according to claim 1 or 2, **characterized in that** the control processor (12) is arranged to continuously compare said actual axle load values with said predefined maximum allowable axle load value (Pₘₐₓ) for each axle (2, 4, 6), and to a driver indicate the need to control the wheel suspension system in the described manner, said indication being communicated to the driver via a driver interface means (26) provided with manual control means (28) for effecting said individual adjustment of the suspension characteristics for each axle (2, 4, 6) in predefined discrete steps.

5. Axle load control system according to claim 4, wherein the truck is a three-axle semi-trailer tractor having a front axle and two rear axles, **characterized in that** said individual adjustment is made In:
- a first discrete step, wherein the load on the two rear axles is distributed with 50% on each rear axle, and
- a second discrete step, wherein the load on the two rear axles is distributed with 60% on the most forward rear axle and 40% on the most rearward rear axle.

6. Axle load control system according to any of the preceding claims, **characterized in that** said wheel suspension system is an air suspension system comprising suspension units (14) in the form of air bellows, and that said load sensor means (16) are adapted to detect the air pressure in said air bellows (14).

7. Axle load control system according to any of the preceding claims, **characterized in that** the control processor (12) is further adapted to receive and process input from an electronic brake system of the truck (1), said input adding temporary limitations to the transferable loads between axles (2, 4, 6) due to present dynamic load conditions on each axle (2, 4, 6),

8. Method of axle load control for a load-carrying truck (1) having a front axle (2) and two or more rear axles (4, 6), using a system comprising a wheel suspension system with a suspension control processor (12) and a load sensor means (16) arranged at each of said axles for detecting one or more load indication parameters, said wheel suspension system being an air suspension system, and
said load sensor means (16) providing said parameters to said suspension control processor (12) which translates the parameters into actual axle load values for the individual axles (2, 4, 6), **characterized by** using the air suspension having suspension units (14) in the form of air bellows, and detecting said load indication parameters by measuring the air pressure in said air bellows (14),
that the control processor (12) compares said actual axle load values with a predefined maximum allowable axle load value (Pₘₐₓ) for each axle (2, 4, 6), and controls the wheel suspension system so as to individually adjust the suspension characteristics for each axle (2, 4, 6) by controlling the air pressure in at least one said air bellow (14) in such a way that excess axle load on an overloaded axle (2, 4, 6) is transferred to one or more of the remaining axles (2, 4, 6), thereby adjusting the theoretical wheelbase (TWB) of the truck (1).

9. Method of axle load control according to claim 8, **characterized in that** the control processor (12) continuously compares said actual axle load values with said predefined maximum allowable axle load value (Pₘₐₓ) for each axle (2, 4, 6), and automatically continuously controls the wheel suspension system in the described manner.

10. Method of axle load control according to claim 8, **characterized in that** the control processor (12) is continuously compares said actual axle load values with said predefined maximum allowable axle load value (Pₘₐₓ) for each axle (2, 4, 6), and to a driver indicates the need to control the wheel suspension system in the described manner, said indication being communicated to the driver via a driver interface means (26) provided with manual control means (28) for effecting said individual adjustment of the suspension characteristics for each axle (2, 4, 6) in predefined discrete steps.

11. Method of axle load control according to any of claims 8-10, **characterized in that** the control processor (12) further receives and processes input from an electronic brake system of the truck (1), said input adding temporary limitations to the transferable loads between axles due to present dynamic load conditions on each axle (2, 4, 6).

## Patentansprüche

1. Achslaststeuersystem für einen Lastkraftwagen (1) mit einer Vorderachse (2) und zwei oder mehreren Hinterachsen (4, 6), wobei das System umfasst:
- ein Radaufhängungssystem mit einem Aufhängungssteuerungsprozessor (12), wobei das Radaufhängungssystem ein Luftfederungssystem mit Aufhängungseinheiten (14) in Form von Luftbälgen ist,
- Lastsensoreinrichtungen (16), die an jeder der Achsen (2, 4, 6) zur Erfassung einer oder mehrerer Lastindikationsparameter anordbar sind, wobei die Lastsensoreinrichtungen (16) die Parameter dem Aufhängungssteuerungsprozessor (12) bereitstellen, der die Parameter in tatsächliche Achslastwerte für die individuellen Achsen (2, 4, 6) übersetzt,
**dadurch gekennzeichnet,**
**dass** die Lastsensoreinrichtungen (16) zur Erfassung der Lastindikationsparameter durch Messung des Luftdrucks in den Luftbälgen (14) konfiguriert sind,
**dass** der Steuerungsprozessor (12) so konfiguriert ist, dass er die tatsächlichen Achslastwerte mit einem vorherbestimmten maximal erlaubten Achslastwert (Pₘₐₓ) für jede Achse (2, 4, 6) vergleicht und das Radaufhängungssystem so steuert oder dem Fahrer anzeigt, dass das Radaufhängungssystem so gesteuert werden muss, dass eine individuelle Einstellung der Aufhängungseigenschaften für jede Achse (2, 4, 6) durch Steuerung des Luftdrucks in wenigstens einem der Luftbälge (14) so bewirkt wird, dass eine übermäßige Achslast an einer überbelasteten Achse (2, 4, 6) auf eine oder mehrere der verbleibenden Achsen (2, 4, 6) übertragen wird,
wodurch der theoretische Radstand (TWB) des Lastkraftwagens (1) eingestellt wird.

2. Achslaststeuersystem nach Anspruch 1, **dadurch gekennzeichnet, dass** der Steuerungsprozessor (12) so konfiguriert ist, dass er das Radaufhängungssystem so steuert, dass eine individuelle Einstellung der Aufhängungseigenschaften der Hinterachsen (4, 6) so bewirkt wird, dass eine übermäßige Achslast an der Vorderachse (2) auf eine oder mehrere der Hinterachsen (4, 6) übertragen wird.

3. Achslaststeuersystem nach Anspruch 1 oder 2, **dadurch gekennzeichnet, dass** der Steuerungsprozessor (12) so konfiguriert ist, dass er fortlaufend die tatsächlichen Achslastwerte mit dem vorherbestimmten maximal erlaubten Achslastwert (Pₘₐₓ) für jede Achse (2, 4, 6) vergleicht und automatisch fortlaufend das Radaufhängungssystem auf die beschriebene Weise steuert.

4. Achslaststeuersystem nach Anspruch 1 oder 2, **dadurch gekennzeichnet, dass** der Steuerungsprozessor (12) so konfiguriert ist, dass er fortlaufend die tatsächlichen Achslastwerte mit dem vorherbestimmten maximal erlaubten Achslastwert (Pₘₐₓ) für jede Achse (2, 4, 6) vergleicht und einen Fahrer darauf hinweist, dass er das Radaufhängungssystem auf die beschriebene Weise steuern muss, wobei der Hinweis dem Fahrer über eine Fahrerschnittstelleneinrichtung (26) mitgeteilt wird, die mit einer manuellen Steuereinrichtung (28) zur Bewirkung der individuellen Einstellung der Aufhängungseigenschaften jeder Achse (2, 4, 6) in vorherbestimmten diskreten Schritten versehen ist.

5. Achslaststeuersystem nach Anspruch 4, bei dem der Lastkraftwagen ein dreiachsiges Sattelschlepperzugfahrzeug mit einer Vorderachse und zwei Hinterachsen ist, **dadurch gekennzeichnet, dass** die individuellen Einstellungen gemacht werden in
- einem ersten diskreten Schritt, in dem die Last der zwei Hinterachsen auf 50% an jeder Hinterachse verteilt wird, und
- einem zweiten diskreten Schritt, in dem die Last an den zwei Hinterachsen zu 60% auf die vorderste Hinterachse und zu 40% auf die hinterste Hinterachse übertragen wird.

6. Achslaststeuersystem nach einem der vorhergehenden Ansprüche, **dadurch gekennzeichnet, dass** das Radaufhängungssystem ein Luftfederungssystem mit Aufhängungseinheiten (14) in Form von Luftbälgen ist, und dass die Lastsensoreinrichtungen (16) zur Erfassung des Luftdrucks in den Luftbälgen (14) ausgelegt sind.

7. Achslaststeuersystem nach einem der vorhergehenden Ansprüche, **dadurch gekennzeichnet, dass** der Steuerungsprozessor (12) außerdem zum Empfang und zur Verarbeitung eines Eingangs von einem elektronischen Bremssystem des Lastkraftwagens (1) ausgelegt ist, wobei der Eingang temporäre Begrenzungen der übertragbaren Lasten zwischen Achsen (2, 4, 6) aufgrund vorhandener dynamischer Lastbedingungen an jeder Achse (2, 4, 6) hinzufügt.

8. Verfahren zur Achslaststeuerung bei einem Lastkraftwagen (1) mit einer Vorderachse (2) und zwei oder mehreren Hinterachsen (4, 6), wobei ein System verwendet wird, das ein Radaufhängungssystem mit einem Aufhängungssteuerungsprozessor (12) und eine Lastsensoreinrichtung (16) umfasst, die an jeder der Achsen zur Erfassung einer oder mehrerer Lastindikationsparameter angeordnet ist, wobei das Radaufhängungssystem ein Luftfederungssystem ist und die Lastsensoreinrichtungen (16) dem Aufhängungssteuerungsprozessor (12) die Parameter bereitstellen, der die Parameter in tatsächliche Achslastwerte für die individuellen Achsen (2, 4, 6) übersetzt, **dadurch gekennzeichnet, dass** eine Luftfederung mit Aufhängungseinheiten (14) in Form von Luftbälgen verwendet wird, und die Lastindikationsparameter durch Messung des Luftdrucks in den Luftbälgen (14) erfasst werden, und dass der Steuerungsprozessor (12) die tatsächlichen Achslastwerte mit einem vorherbestimmten maximal erlaubten Achslastwert (Pₘₐₓ) für jede Achse (2, 4, 6) vergleicht, und das Radaufhängungssystem so steuert, dass die Aufhängungseigenschaften für jede Achse (2, 4, 6) durch Steuerung des Luftdrucks in wenigstens einem Luftbalg (14) individuell so eingestellt werden, dass eine übermäßige Achslast an einer überbelasteten Achse (2, 4, 6) auf eine oder mehrere der verbleibenden Achsen (2, 4, 6) übertragen wird, wodurch der theoretische Radstand (TWB) des Lastkraftwagens (1) eingestellt wird.

9. Verfahren zur Achslaststeuerung nach Anspruch 8, **dadurch gekennzeichnet, dass** der Steuerungsprozessor (12) die tatsächlichen Achslastwerte mit dem vorherbestimmten maximal erlaubten Achslastwert (Pₘₐₓ) fortlaufend für jede Achse (2, 4, 6) vergleicht und das Radaufhängungssystem auf die beschriebene Weise automatisch fortlaufend steuert.

10. Verfahren zur Achslaststeuerung nach Anspruch 8, **dadurch gekennzeichnet, dass** der Steuerungsprozessor (12) fortlaufend die tatsächlichen Achslastwerte mit dem vorherbestimmten maximalen erlaubten Achslastwert (Pₘₐₓ) für jede Achse (2, 4, 6) vergleicht und den Fahrer darauf hinweist, dass das Radaufhängungssystem auf die beschriebene Weise gesteuert werden muss, wobei der Hinweis dem Fahrer über eine Fahrerschnittstelleneinrichtung (26) mitgeteilt wird, die mit einer manuellen Steuereinrichtung (28) zur Bewirkung der individuellen Einstellung der Aufhängungseigenschaften für jede Achse (2, 4, 6) in vorherbestimmten diskreten Schritten versehen ist.

11. Verfahren zur Achslaststeuerung nach einem der Ansprüche 8 bis 10, **dadurch gekennzeichnet, dass** der Steuerungsprozessor (12) außerdem einen Eingang von einem elektronischen Bremssystem des Lastkraftwagens empfängt und verarbeitet, wobei der Eingang temporäre Begrenzungen der übertragbaren Lasten zwischen Achsen aufgrund vorhandener dynamischer Lastbedingungen an jeder Achse (2, 4, 6) hinzufügt.

## Revendications

1. Système de régulation de la charge à l'essieu pour un poids lourd (1) possédant un essieu avant (2) et deux ou plus de deux essieux arrière (4, 6), le système comprenant :
- un système de suspension des roues avec un processeur de commande de suspension (12), ledit système de suspension des roues étant un système de suspension pneumatique comprenant des unités de suspension (14) sous la forme de soufflets pneumatiques ;
- des moyens formant détecteur de charge (16), pouvant être agencés au niveau de chacun desdits essieux (2, 4, 6) pour détecter un ou plusieurs paramètres d'indication de charge, lesdits moyens formant détecteur de charge (16) fournissant lesdits paramètres audit processeur de commande de suspension (12) qui traduit les paramètres en valeurs de charge d'essieu réelles pour les essieux individuels (2, 4, 6),
**caractérisé en ce que**
lesdits moyens formant détecteur de charge (16) sont agencés pour détecter les paramètres d'indication de charge en mesurant la pression d'air dans lesdits soufflets pneumatiques (14),
le processeur de commande (12) est agencé pour comparer lesdites valeurs de charge d'essieu réelles avec une valeur de charge d'essieu admissible maximum prédéfinie (Pₘₐₓ) pour chaque essieu (2, 4, 6), et pour commander - ou indiquer à un conducteur la nécessité de commander - le système de suspension des roues de manière à effectuer un ajustement individuel des caractéristiques de suspension pour chaque essieu (2, 4, 6) en commandant la pression d'air dans au moins un desdits soufflets pneumatiques (14) de telle manière que la charge d'essieu en excès sur un essieu (2, 4, 6) surchargé est transférée à un ou plusieurs des essieux (2, 4, 6) restants, ce qui ajuste l'entraxe théorique (TWB) du camion (1).

2. Système de régulation de la charge à l'essieu selon la revendication 1, **caractérisé en ce que** le processeur de commande (12) est agencé pour commander le système de suspension des roues de manière à effectuer un ajustement individuel des caractéristiques de suspension pour les essieux arrière (4, 6) de telle manière qu'une charge à l'essieu en excès sur l'essieu avant (2) est transférée à un ou plusieurs des essieux arrière (4, 6).

3. Système de régulation de la charge à l'essieu selon la revendication 1 ou 2, **caractérisé en ce que** le processeur de commande (12) est agencé pour comparer de manière continue lesdites valeurs de charge à l'essieu réelles avec ladite valeur de charge à l'essieu admissible maximum prédéfinie (Pₘₐₓ) pour chaque essieu (2, 4, 6), et pour commander en continu de manière automatique le système de suspension des roues de la manière décrite.

4. Système de régulation de la charge à l'essieu selon la revendication 1 ou 2, **caractérisé en ce que** le processeur de commande (12) est agencé pour comparer en continu lesdites valeurs de charge à l'essieu réelles avec ladite valeur de charge à l'essieu admissible maximum prédéfinie (Pₘₐₓ) pour chaque essieu (2, 4, 6), et pour indiquer à un conducteur la nécessité de commander le système de suspension des roues de la manière décrite, ladite indication étant communiquée au conducteur par l'intermédiaire d'un moyen d'interface conducteur (26) muni de moyens de commande manuelle (28) pour effectuer ledit ajustement individuel de caractéristiques de suspension pour chaque essieu (2, 4, 6) par incréments discrets prédéfinis.

5. Système de régulation de la charge à l'essieu selon la revendication 4, dans lequel le camion est un tracteur avec semi-remorque trois essieux possédant un essieu avant et deux essieux arrière, **caractérisé en ce que** ledit ajustement individuel est réalisé en :
- un premier incrément discret, dans lequel la charge sur les deux essieux arrière est répartie à raison de 50 % sur chaque essieu arrière, et
- un second incrément discret, dans lequel la charge sur les deux essieux arrière est répartie à raison de 60 % sur l'essieu arrière situé le plus vers l'avant et 40 % sur l'essieu arrière situé le plus vers l'arrière.

6. Système de régulation de la charge à l'essieu selon l'une quelconque des revendications précédentes, **caractérisé en ce que** ledit système de suspension des roues est un système de suspension pneumatique comprenant des unités de suspension (14) sous la forme de soufflets pneumatiques, et lesdits moyens formant détecteur de charge (16) sont appropriés pour détecter la pression d'air dans ledit soufflet pneumatique (14).

7. Système de régulation de la charge à l'essieu selon l'une quelconque des revendications précédentes, **caractérisé en ce que** le processeur de commande (12) est en outre approprié pour recevoir et traiter des données d'entrée provenant d'un système de freinage électronique du camion (1), lesdites données d'entrée ajoutant des limites temporaires aux charges transférables entre les essieux (2, 4, 6) en raison de conditions de charge dynamique existantes sur chaque essieu (2, 4, 6).

8. Procédé de régulation de la charge à l'essieu pour un camion poids lourd (1) possédant un essieu avant (2) et deux ou plus de deux essieux arrière (4, 6), utilisant un système comprenant un système de suspension des roues avec un processeur de commande de suspension (12) et des moyens formant détecteur de charge (16) agencés au niveau de chacun desdits essieux pour détecter un ou plusieurs paramètres d'indication de charge, ledit système de suspension des roues étant un système de suspension pneumatique, et
lesdits moyens formant détecteur de charge (16) fournissant lesdits paramètres audit processeur de commande de suspension (12) qui traduit les paramètres en valeurs de charge à l'essieu réelles pour les essieux individuels (2, 4, 6), **caractérisé par** une utilisation de la suspension pneumatique présentant des unités de suspension (14) sous le forme de soufflets pneumatiques, et une détection desdits paramètres d'indication de charge par mesure de la pression de l'air dans lesdits soufflets pneumatiques (14), et en ce que le processeur de commande (12) compare lesdites valeurs de charge à l'essieu réelles avec une valeur de charge à l'essieu admissible maximum prédéfinie (Pₘₐₓ) pour chaque essieu (2, 4, 6), et commande le système de suspension des roues de manière à ajuster de manière individuelle les caractéristiques de suspension pour chaque essieu (2, 4, 6) par commande de la pression d'air dans au moins un desdits soufflets pneumatiques (14) de telle manière qu'une charge à l'essieu en excès sur un essieu surchargé (2, 4, 6) est transférée à un ou plusieurs des essieux (2, 4, 6) restants, ce qui ajuste l'entraxe théorique (TWB) du camion (1).

9. Procédé de régulation de la charge à l'essieu selon la revendication 8, **caractérisé en ce que** le processeur de commande (12) compare en continu lesdites valeurs de charge à l'essieu réelles avec ladite valeur de charge à l'essieu admissible maximum prédéfinie (Pₘₐₓ) pour chaque essieu (2, 4, 6), et commande en continu de manière automatique le système de suspension des roues de la manière décrite.

10. Procédé de régulation de la charge à l'essieu selon la revendication 8, **caractérisé en ce que** le processeur de commande (12) compare de manière continue lesdites valeurs de charge à l'essieu réelles avec ladite valeur de charge à l'essieu admissible maximum prédéfinie (Pₘₐₓ) pour chaque essieu (2, 4, 6), et indique à un conducteur la nécessité de commander le système de suspension des roues de la manière décrite, ladite indication étant communiquée au conducteur par l'intermédiaire d'un moyen formant interface conducteur (26) muni de moyens de commande manuelle (28) pour effectuer ledit ajustement individuel des caractéristiques de suspension pour chaque essieu (2, 4, 6) par incréments discrets prédéfinis.

11. Procédé de régulation de la charge à l'essieu selon l'une quelconque des revendications 8 à 10, **caractérisé en ce que** le processeur de commande (12) reçoit et traite en outre des données d'entrée provenant d'un système de freinage électronique du camion (1), lesdites données d'entrée ajoutant des limites temporaires aux charges transférables entre les essieux en raison de conditions de charge dynamique existantes sur chaque essieu (2, 4, 6).
